# FASCICULE DE BREVET EUROPEEN

(11) **EP 2 960 589 B1**
(45) Date de publication et mention de la délivrance du brevet: **13.10.2021**
(21) Numéro de dépôt: 15173122.1
(22) Date de dépôt: 22.06.2015
(51) Int. Cl.: F24F 3/16, F24F 11/00

(54) **SYSTÈME ET MÉTHODE DE RÉGULATION DE TEMPÉRATURE ET D'ÉPURATION DE L'AIR AMBIANT DANS UN BÂTIMENT**
SYSTEM UND METHODE ZUR TEMPERATURREGULIERUNG UND LUFTREINIGUNG DER UMGEBUNGSLUFT IN EINEM GEBÄUDE
SYSTEM AND METHOD FOR CONTROLLING TEMPERATURE AND CLEANING AMBIENT AIR IN A BUILDING

(30) Priorité: 23.06.2014 FR 1455800
(43) Date de publication de la demande: 30.12.2015
(73) Titulaire: Compagnie Industrielle D'Applications Thermiques, 01350 Culoz (FR)
(72) Inventeur: Altazin, Marc, 73100 Brison Saint Innocent (FR); Petit, Philippe, 73310 Ruffieux (FR); Latour, Thierry, 73310 Ruffieux (FR); Vialle, Pierre Jean, 38780 Estrablin (FR)
(74) Mandataire: Lavoix

(56) Documents cités:
- EP-A1- 1 515 097
- EP-A2- 0 518 327
- WO-A1-94/14013
- WO-A1-2004/048858
- FR-A1- 2 676 367
- US-A1- 2005 277 381
- US-A1- 2009 032 235
- US-A1- 2009 123 343
- US-A1- 2011 274 600
- US-A1- 2014 131 009

## Description

La présente invention concerne un système de régulation de température et d'épuration de l'air ambiant dans un bâtiment, ainsi qu'une méthode de pilotage d'un tel système.

L'air ambiant dans un bâtiment est soumis à des pollutions spécifiques émanant de nombreuses sources de polluants. Les dispositions relatives à la performance énergétique des bâtiments, selon la Directive 2010/31/UE du Parlement européen et du Conseil du 19 mai 2010, imposent de prendre des mesures pour assurer la performance énergétique des bâtiments. Une des conséquences est la construction de bâtiments de plus en plus étanches à l'air, pour lesquels le renouvellement de l'air peut ne pas suffire à garantir un air ambiant sain, en particulier en présence de sources émettant des polluants. La qualité de l'air est un enjeu de santé publique nécessitant l'emploi d'épurateurs d'air.

Il est connu de traiter la pollution par ventilation. Le débit de ventilation et/ou d'extraction de l'air ambiant pollué est adapté en fonction de la concentration en polluant. La dépollution est assurée par le renouvellement de l'air et/ou l'extraction de l'air pollué, de sorte que les polluants ne sont pas éliminés. La concentration en polluants diminue suite à l'apport d'air neuf.

Pour éliminer les polluants, il est connu d'équiper les centrales de traitement de l'air de filtres à particules qui retiennent la poussière de l'air neuf de renouvellement, et le cas échéant de l'air recyclé. D'autres centrales connues sont équipées de systèmes de dépollution prévus pour éliminer les polluants chimiques ou biologiques, par exemple des systèmes utilisant le plasma froid, la combinaison de l'absorption sur charbon actif et de la photocatalyse, ou la combinaison du plasma froid et de la photocatalyse.

Par ailleurs, le traitement de la pollution par ventilation est indépendant de la régulation de la température de l'air ambiant, qui est assurée par un système supplémentaire, par exemple un ventilo-convecteur ou une pompe à chaleur.

Dans les systèmes connus, le traitement de la pollution par filtration ou épuration est indépendant du problème du contrôle de la température de l'air ambiant, qu'il est nécessaire de réguler par ailleurs.

US-A1-2011/253359 décrit un système de régulation de la température de l'air ambiant dans un bâtiment à l'aide d'un dispositif « HVAC », incluant une pluralité de compresseurs, de moyens de chauffe, de ventilateurs et de commandes de vannes mécaniques. Néanmoins, ce système de régulation ne permet pas d'épurer l'air ambiant d'un bâtiment, mais simplement de remplacer l'air intérieur par de l'air extérieur par ventilation. Ainsi, les polluants ne sont pas traités, mais simplement rejetés.

FR-A1-2 676 367 décrit un dispositif de contrôle d'une atmosphère interne permettant à la fois de réguler la température de l'air ambiant dans un bâtiment, et d'envoyer un désinfectant ou un insecticide pendant un temps donné pour détruire les germes et insectes, ce qui ne permet pas d'épurer l'air interne, dans la mesure où cet air interne est au contraire pollué par l'insecticide et doit être renouvelé. Ce dispositif permet également d'extraire et décharger l'odeur de l'air, sans toutefois permettre le traitement de polluants particulaires, chimiques ou biologiques en fonction de la concentration de ces polluants dans l'air. Ce document envisage des filtres qui permettent simplement d'extraire des poussières de l'air intérieur, mais qui ne permettent pas d'extraire des polluants particulaires tels que des particules fines. En outre, le fonctionnement des filtres est indépendant du taux de pollution. Enfin, FR-A1-2 676 367 propose simplement de renouveler l'air intérieur par de l'air extérieur, de sorte que les polluants sont en réalité rejetés à l'extérieur.

Un système de contrôle de conditions environnementales dans un espace de vie est décrit dans US-A1-2005/0277381. Ce système de contrôle comprend un dispositif de commande qui coordonne l'action de moyens de mise en mouvement d'air, notamment du genre ventilateurs plafonniers ou souffleries, avec d'autres appareils séparés, notamment du genre unité de climatisation ou de chauffage et du genre dispositif d'épuration.

C'est à ces inconvénients qu'entend plus particulièrement remédier l'invention en proposant un système combiné de régulation de température et d'épuration de l'air ambiant dans un bâtiment.

L'invention a pour objet un système de régulation de température et d'épuration de l'air ambiant conforme à la revendication 1.

Grâce à l'invention, le système permet d'assurer à la fois le confort thermique et de maîtriser la pollution, en fonction du besoin thermique et de la concentration limite en polluant. En particulier, le module d'épuration, permet le traitement des polluants chimiques ou biologiques à des fins sanitaires, ce qui diffère d'une simple désodorisation de l'air, laquelle n'a pas nécessairement d'incidence sur la santé. De plus, l'épuration de l'air étant effectuée en fonction de la concentration en polluants, elle est plus efficace.

Selon des aspects avantageux mais non obligatoires de l'invention, un tel système peut inclure une ou plusieurs des caractéristiques suivantes, prises dans toute combinaison techniquement admissible :
- Le dispositif d'épuration inclut un filtre à particules apte à retenir des polluants particulaires.
- Les moyens de détection incluent un capteur particulaire mesurant la concentration en particules fines et le dispositif d'épuration inclut un filtre à particules fines.
- Les moyens de détection incluent un capteur chimique mesurant la concentration en formaldéhyde benzène ou un styrène et le dispositif d'épuration inclut un système utilisant le plasma froid ou une combinaison de l'absorption sur charbon actif et de la photocatalyse, ou une combinaison du plasma froid et de la photocatalyse.
- Les moyens de détection incluent un capteur biologique mesurant la concentration en virus, en champignons ou en bactéries et le dispositif d'épuration inclut un système utilisant le plasma froid ou une combinaison de l'absorption sur charbon actif et de la photocatalyse, ou une combinaison du plasma froid et de la photocatalyse.

Un autre aspect de l'invention concerne une méthode de pilotage d'un tel système de régulation de température et d'épuration de l'air ambiant dans un bâtiment, caractérisée en ce qu'elle comprend des étapes dans lesquelles :
a) l'unité de pilotage règle l'ouverture de la vanne et l'intensité des moyens de mise en mouvement de l'air ambiant en fonction du résultat de la comparaison entre la température ambiante et une température de consigne,
b) l'unité de pilotage commande l'activation du module d'épuration du dispositif d'épuration pour traiter les polluants particulaires chimiques et/ou biologiques en fonction du résultat de la comparaison entre la concentration en polluant dans l'air ambiant et une concentration limite.

Selon des aspects avantageux mais non obligatoires de l'invention, une telle méthode peut inclure une ou plusieurs des caractéristiques suivantes, prises dans toute combinaison techniquement admissible :
- Les étapes a) et b) sont successives.
- Lorsque la concentration en polluant dans l'air ambiant est supérieure à une concentration limite, l'unité de pilotage active le dispositif d'épuration pendant une durée prédéterminée.
- L'unité de pilotage est apte à régler l'intensité du groupe moto-ventilateur selon plusieurs vitesses croissantes qui représentent un pourcentage paramétrable de la vitesse maximale de rotation des moyens de mise en mouvement de l'air ambiant.
- L'unité de pilotage est apte à moduler le taux d'ouverture de la vanne selon plusieurs taux croissants de l'ouverture de la vanne, qui représentent un pourcentage paramétrable de l'ouverture maximale de la vanne.
- L'étape b) comprend une sous-étape au cours de laquelle l'unité de pilotage compare la concentration en particules fines avec la concentration limite.
- Le système comprend un capteur chimique et, lors de l'étape b), l'unité de pilotage compare la concentration en composé chimique, notamment le formaldéhyde benzène ou un styrène par rapport à la concentration limite.
- Le système comprend un capteur biologique et, lors de l'étape b), l'unité de pilotage compare la concentration en un polluant microbiologique, notamment un virus, un champignon ou une bactérie par rapport à la concentration limite.

L'invention sera mieux comprise et d'autres aspects de celle-ci seront mieux compris à la lumière de la description qui va suivre d'un système de régulation de température et d'épuration de l'air ambiant dans un bâtiment, ainsi que d'une méthode de pilotage d'un tel système conforme à son principe, donnée uniquement à titre d'exemple et faite en référence aux dessins annexés dans lesquels :
- la figure 1 est un schéma d'un système de régulation conforme à l'invention ;

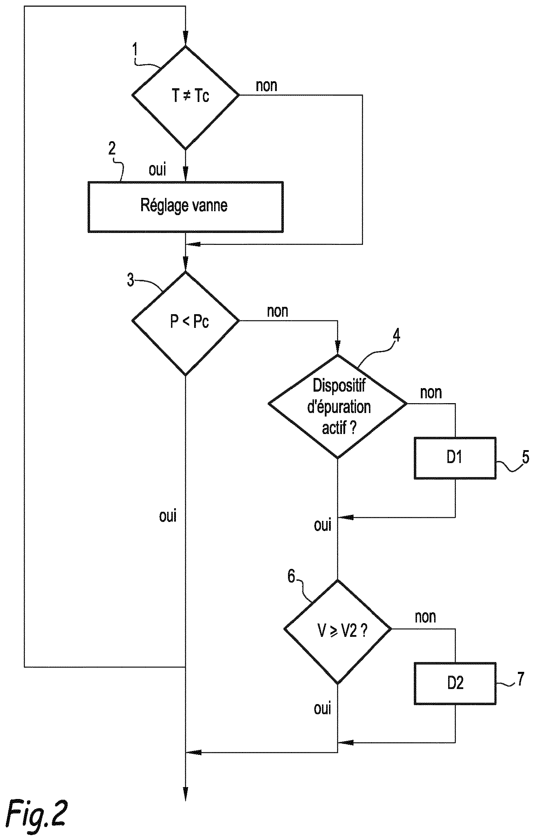

- la figure 2 est un schéma bloc d'une méthode de pilotage du système de la figure 1 ;
- la figure 3 est un graphique montrant l'évolution de la vitesse de rotation d'un ventilateur du système, en fonction des besoins en énergie thermique.

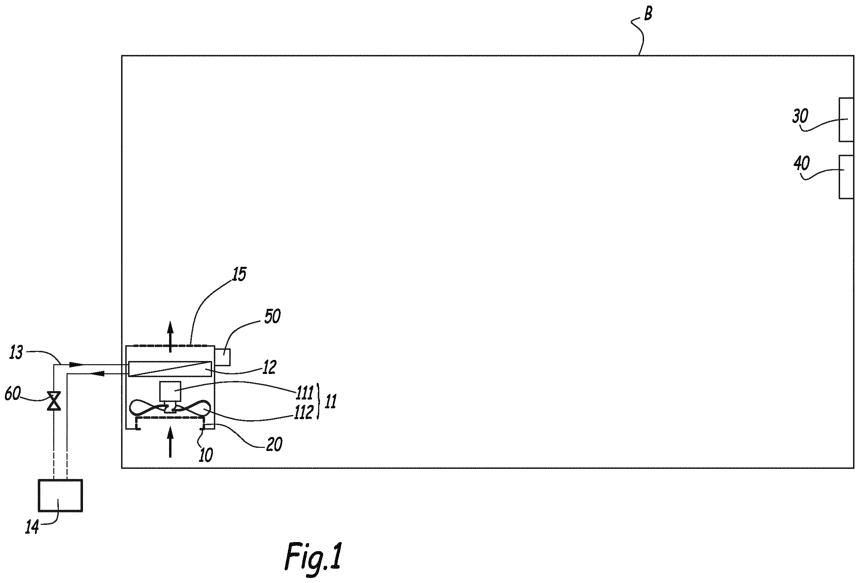

Le système de régulation de température et d'épuration de l'air ambiant dans un bâtiment B conforme à la présente invention est représenté à la figure 1 et comprend au moins un émetteur thermique 10 apte à réguler la température de l'air ambiant, c'est-à-dire à réchauffer ou rafraîchir l'air. Par exemple, il peut s'agir d'un ventilo-convecteur incluant des moyens de mise en mouvement 11 de l'air ambiant, par exemple un groupe moto-ventilateur comprenant un moteur 111 actionnant un ventilateur 112 apte à faire circuler l'air contre des moyens d'échange thermique 12 air/eau entre l'air ambiant et un circuit de fluide caloporteur 13, par exemple une ou plusieurs batteries d'échange. Le fluide caloporteur est apte à être chauffé et/ou rafraîchi par une unité de chauffage et/ou de rafraîchissement 14, par exemple une pompe à chaleur, notamment une pompe à chaleur réversible. Le fluide caloporteur peut être de l'eau, éventuellement additivée.

Lorsque le groupe moto-ventilateur 11 est activé, l'air ambiant est aspiré au contact de la batterie d'échange 12 ce qui augmente ou diminue la température de l'air ambiant, selon que la pompe à chaleur 14 fonctionne en mode chauffage et/ou rafraîchissement. L'air est ensuite diffusé dans le bâtiment B au travers d'un organe de diffusion 15.

Le groupe moto-ventilateur 11 peut fonctionner avec plusieurs vitesses de rotation, par exemple trois vitesses de rotation, à savoir une première vitesse basse V1 limitant les nuisances acoustiques, une deuxième vitesse ou vitesse moyenne V2 assurant un niveau de confort thermique moyen tout en limitant la gêne acoustique, et une troisième vitesse ou vitesse haute V3 pour conditionner la pièce en température très rapidement, au détriment du confort acoustique.

Les vitesses V1, V2 et V3 sont croissantes et non nulles, et représentent un pourcentage paramétrable de la vitesse maximale de rotation du ventilateur 112. On note V0 une vitesse nulle du ventilateur 112.

Le ventilateur 112 a pour fonction de forcer le mouvement de l'air ambiant dans l'émetteur thermique 10, et n'assure pas le renouvellement de l'air ambiant, appelé selon l'usage « ventilation ».

En variante, le ventilo-convecteur 10 est remplacé par une unité intérieure de climatisation.

Un dispositif d'épuration de l'air ambiant 20 est incorporé au système. Il s'agit d'un module d'épuration apte à traiter des polluants chimiques et/ou biologiques. Par exemple, les polluants chimiques et/ou biologiques peuvent être éliminés par un système utilisant le plasma froid, ou la combinaison de l'adsorption sur charbon actif et la photocatalyse. En variante, il peut s'agir d'un système utilisant la combinaison du plasma froid et de la photocatalyse. Le dispositif d'épuration peut également comprendre un module d'épuration apte à traiter des polluants particulaires, tel qu'un filtre à particules apte à retenir des polluants particulaires. En particulier, le filtre à particules peut être conçu pour retenir des polluants particulaires parfois désignés « particules fines », c'est-à-dire des particules dont la taille est inférieure à 2,5 µm.

Le dispositif d'épuration peut comprendre une combinaison de plusieurs de ces dispositifs d'épuration

Des moyens de mesure de la concentration en polluant dans l'air ambiant incluent au moins un capteur de pollution 30 mesurant une concentration P de polluant spécifique. Le capteur de pollution 30 peut être un capteur chimique, un capteur particulaire, et/ou un capteur biologique. La concentration en polluant spécifique P est par exemple la concentration en particules, et en particulier en particules fines, lorsqu'il s'agit d'un capteur particulaire, la concentration en composé chimique, notamment le formaldéhyde benzène ou un styrène lorsqu'il s'agit d'un capteur chimique, ou un polluant microbiologique, tel qu'un virus, un champignon ou une bactérie, lorsqu'il s'agit d'un capteur biologique.

On comprend que l'épuration de l'air ambiant peut être effectuée sans apport d'air extérieur du bâtiment, et que les polluants ne sont pas rejetés à l'extérieur du bâtiment par le système.

Une unité de pilotage 50 est apte à contrôler l'émetteur thermique 10 en fonction de la différence de température entre une température de consigne Tc programmée dans une mémoire de l'unité de pilotage 50, et la température T de l'air ambiant, mesurée par des moyens de mesure de la température de l'air ambiant, par exemple un capteur de température 40.

L'unité de pilotage 50 est également apte à piloter le dispositif d'épuration 20, en fonction de l'écart entre la concentration en polluant P et une concentration limite en polluant Pc, programmée dans la mémoire de l'unité de pilotage 50.

Le besoin en énergie thermique du bâtiment B est proportionnel au débit du fluide caloporteur 13 de l'émetteur thermique 10. Une vanne 60 de réglage du débit est piloté par l'unité de pilotage 50, en fonction de l'écart entre les températures Tc et T, pour assurer le chauffage ou le rafraichissement de l'air ambiant.

L'intensité du dispositif d'épuration 20 de l'air ambiant est fonction de l'intensité du ventilateur 112. En effet, plus la vitesse du ventilateur 112 est élevée et plus le volume d'air traité par le dispositif d'épuration 20 est important.

La suite de la description concerne une méthode de pilotage du système de régulation de température et d'épuration de l'air ambiant dans le bâtiment B, représentée à la figure 1. Il s'agit d'un pilotage multicritères permettant d'assurer le confort thermique et de maîtriser la pollution en fonction du besoin thermique et de la concentration limite en polluant Pc.

Dans une première étape 1, l'unité de pilotage 50 compare la température ambiante Ta du bâtiment avec la température de consigne Tc.

Dans une deuxième étape 2 et lorsque la température ambiante T est différente de la température de consigne Tc, alors l'unité de pilotage 50 actionne la vanne 60 pour régler le débit du fluide caloporteur 13.

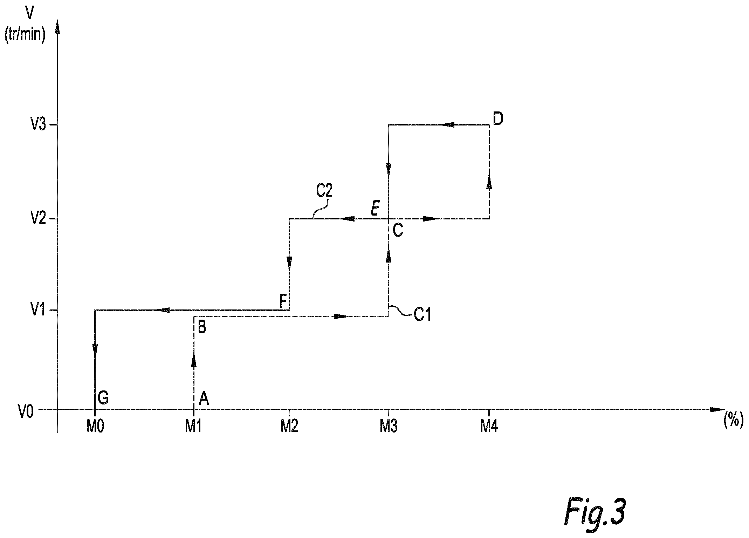

Dans cette étape 2, l'unité de pilotage module le taux d'ouverture M de la vanne 60 en fonction de l'écart entre la température ambiante T et la température de consigne Tc. La vanne 60 est ouverte au maximum lorsque le besoin en énergie thermique est très important, et elle est partiellement ouverte, voire fermée, lorsque le besoin est faible ou nul. Le graphique de la figure 3 montre l'évolution de la vitesse V du ventilateur, en tr/min, en fonction du taux d'ouverture M de la vanne 60, exprimé en pourcentage.

On note M0, M1, M2, M3 et M4 cinq taux croissants de l'ouverture M de la vanne 60, qui représentent un pourcentage paramétrable de l'ouverture maximale. Les taux M0 à M4 sont proportionnels à des niveaux du besoin en énergie thermique du bâtiment B. Les niveaux M0à M4 sont respectivement égaux à 0% et 100%. Par exemple, le taux M1 est égal à 25%, M2 à 50% et M3 à 75%.

La courbe C1, représentée en trait pointillé entre les points A et D, correspond à l'ouverture progressive de la vanne 60, lorsqu'un apport d'énergie thermique chaude ou froide est nécessaire pour chauffer ou rafraîchir l'air ambiant du bâtiment B, selon que le système fonctionne en mode chauffage ou rafraichissement.

Soit A un premier point de fonctionnement, pour lequel la vitesse V du ventilateur 112 est égale à V0 et le taux d'ouverture de la vanne est égal au taux M1. Lorsque le taux d'ouverture M de la vanne 60 dépasse le taux M1, l'unité de pilotage 50 pilote le ventilateur pour qu'il passe en vitesse basse V1, à un deuxième point de fonctionnement B, afin d'assurer le confort thermique tout en limitant la gêne acoustique. Tant que le taux d'ouverture M de la vanne 60 est compris entre M1 et M3, le ventilateur 112 reste en vitesse basse V1.

Lorsque le taux d'ouverture M de la vanne 60 dépasse M3, le ventilateur 112 passe en vitesse moyenne V2, comme représenté au point de fonctionnement C. Tant que le taux d'ouverture M de la vanne est compris entre M3 et M4, le ventilateur 112 reste en vitesse moyenne V2.

Dès qu'il est nécessaire d'apporter un supplément d'énergie thermique, le ventilateur 112 passe en vitesse haute V3, comme représenté au point de fonctionnement D.

La courbe C2, représentée en trait fort entre les points D et G, correspond à la fermeture progressive de la vanne 60, dans le cas d'un surplus d'énergie thermique dans le bâtiment B, c'est-à-dire lorsque l'air est trop chaud par rapport à la température de consigne Tc et que l'installation fonctionne en mode chauffage, ou lorsque l'air est trop froid par rapport à la température de consigne Tc et que l'installation fonctionne en mode rafraîchissement.

Au point de fonctionnement D et tant que le taux d'ouverture M de la vanne 60 reste compris entre M3 et M4, le ventilateur 112 reste en vitesse haute V3.

Dès que le taux d'ouverture M passe en dessous de M3, l'unité de pilotage 50 pilote le ventilateur 112 pour qu'il passe en vitesse moyenne V2, à un point de fonctionnement E dont les paramètres sont identiques à ceux du point de fonctionnement C.

Tant que le taux d'ouverture M de la vanne 60 est compris entre M2 et M3, le ventilateur 112 reste en vitesse moyenne V2.

Lorsque le taux d'ouverture M de la vanne 60 passe en dessous de M2, le ventilateur 112 passe en vitesse basse V1, comme représenté au point de fonctionnement F. Tant que le taux d'ouverture M de la vanne 60 est compris entre M0 et M1, le ventilateur 112 reste en vitesse basse V1.

Lorsque le surplus d'énergie thermique s'annule, la vanne 60 passe au taux d'ouverture M0.

En résumé, les étapes 1 et 2 correspondent avantageusement à une étape a) dans laquelle l'unité de pilotage 50 règle 2 l'ouverture de la vanne 60 et l'intensité des moyens de mise en mouvement 112 de l'air ambiant en fonction du résultat de la comparaison 1 entre la température ambiante T et une température de consigne Tc.

Au terme des étapes 1 et 2, le taux d'ouverture M de la vanne 60 est réglé en adéquation avec les besoins en chauffage ou rafraichissement du bâtiment B. La suite de la méthode, correspondant à une étape b), permet de régler l'intensité du dispositif d'épuration en fonction de la concentration en polluant P.

Dans une troisième étape 3 successive aux étapes 1 et 2, l'unité de pilotage 50 compare le niveau de pollution P avec la concentration limite en polluant Pc.

Le niveau de pollution P comparée dans l'étape 3 est la concentration en polluant chimique et/ou biologique. En particulier, lors de l'étape 3, l'unité de pilotage compare la concentration en composé chimique, notamment le formaldéhyde benzène ou un styrène lorsqu'il s'agit d'un capteur chimique, ou un polluant microbiologique, tel qu'un virus, un champignon ou une bactérie, lorsqu'il s'agit d'un capteur biologique, à la concentration limite Pc.

D'autres polluants peuvent également être mesurés et comparés à la concentration limite Pc : la concentration en particules, et en particulier en particules fines, lorsqu'il s'agit d'un capteur particulaire. Ainsi, l'étape 3 comprend une sous-étape au cours de laquelle l'unité de pilotage compare la concentration (P) en particules fines avec la concentration limite (Pc).

Lorsque la concentration en polluant P est inférieure à la concentration limite Pc, l'unité de pilotage 50 active à nouveau la première étape 1 sans agir sur l'état du dispositif d'épuration 20.

Lorsque le niveau de pollution P est supérieur à la concentration limite Pc, l'unité de commande 50 active une quatrième étape 4.

Dans la quatrième étape 4, lorsque le dispositif d'épuration 20 est inactif, l'unité de pilotage 50 active une cinquième étape 5 dans laquelle l'unité de pilotage 50 active le dispositif d'épuration 20 pendant une première durée prédéterminée D1, par exemple 3 min. Ainsi, la concentration P diminue, ce qui améliore la qualité de l'air.

Dans l'étape 5, l'unité de pilotage 50 active en particulier le module d'épuration pour traiter les polluants chimiques et/ou biologiques tel que décrit ci-avant.

Une sixième étape 6 est activée lorsque, dans la quatrième étape 4, le dispositif d'épuration 20 est actif. La sixième étape est également activée à la fin de la durée d'activation D1 du dispositif d'épuration, à la fin de la cinquième étape 5.

Dans la sixième étape 6, l'unité de pilotage 50 compare la vitesse V du ventilateur 112 avec la vitesse moyenne V2. Lorsque la vitesse V est inférieure à la vitesse moyenne V2, une septième étape 7 est activée, dans laquelle l'unité de pilotage 50 active la vitesse moyenne V2 du ventilateur 112 pendant une deuxième durée prédéterminée D2, par exemple 3 min. Lorsque la vitesse V est supérieure ou égale à la vitesse moyenne V2, l'unité de pilotage 50 ne modifie pas la vitesse V.

En définitive, les étapes 3 à 7 correspondent à une étape b), dans laquelle l'unité de pilotage 50 commande 5 l'activation du dispositif d'épuration 20 en fonction du résultat de la comparaison 3 entre la concentration en polluant P dans l'air ambiant et une concentration limite Pc.

Le fait que l'étape b), et en particulier les étapes 3 et 5, soit postérieure aux étapes 1 et 2, c'est-à-dire l'étape a), permet de donner la priorité au pilotage de la température de l'air ambiant, afin de garantir en premier lieu le confort de l'utilisateur, et en second lieu seulement, l'épuration de l'air à des fins sanitaire. En effet, l'utilisateur est généralement davantage sensible à l'inconfort que peut générer une température inadaptée, dans la mesure où la température donne une sensation de chaud ou de froid à cet utilisateur. Un niveau de pollution élevé, quant à lui, n'est pas nécessairement perçu par l'utilisateur, quand bien même une telle pollution pourrait avoir des effets néfastes sur sa santé.

Au terme des étapes 1 à 7, l'unité de pilotage 50 active à nouveau la première étape 1. Les étapes 1 à 7 sont répétées en boucle.

En variante, le ventilo-convecteur 10 est remplacé par une unité intérieure de climatisation.

Dans le cadre de l'invention, les différentes variantes peuvent être combinées entre elles.

## Revendications

1. Système de régulation de température et d'épuration de l'air ambiant dans un bâtiment (B), comprenant :
- au moins un émetteur thermique (10), qui est un ventilo-convecteur ou une unité intérieure de climatisation et qui comprend un groupe moto-ventilateur comprenant un moteur (111) et un ventilateur (112) formant des moyens de mise en mouvement (11) de l'air ambiant, l'émetteur thermique comprenant des moyens d'échange thermique (12) entre l'air ambiant et un circuit de fluide caloporteur (13), les moyens de mise en mouvement étant aptes à faire circuler l'air ambiant contre les moyens d'échange thermique,
- une vanne (60) de réglage du débit du fluide caloporteur (13),
- des moyens de mesure (40) de la température (T) de l'air ambiant, - des moyens de détection (30) de la concentration (P) d'au moins un polluant dans l'air ambiant,
- un dispositif d'épuration (20) de l'air ambiant incluant au moins un module d'épuration apte à traiter des polluants particulaires, chimiques ou biologiques détectés par lesdits moyens de détection (30) de la concentration (P) d'au moins un polluant dans l'air ambiant, l'intensité du dispositif d'épuration (20) étant fonction de l'intensité des moyens de mise en mouvement (112) de l'air ambiant,
- une unité de pilotage (50) apte à contrôler l'activation des moyens de mise en mouvement (11) de l'air ambiant, de la vanne (60) et du dispositif d'épuration (20) en fonction de la température (T) de l'air ambiant et de la concentration (P) en polluant dans l'air ambiant.

2. Système selon la revendication 1, **caractérisé en ce que** le dispositif d'épuration (20) inclut un filtre à particules apte à retenir des polluants particulaires.

3. Système selon l'une quelconque des revendications précédentes, **caractérisé en ce que** les moyens de détection (30) incluent un capteur particulaire mesurant la concentration (P) en particules fines et le dispositif d'épuration (20) inclut un filtre à particules fines.

4. Système selon l'une quelconque des revendications précédentes, **caractérisé en ce que** les moyens de détection (30) incluent un capteur chimique mesurant la concentration (P) en formaldéhyde benzène ou un styrène et le dispositif d'épuration (20) inclut un système utilisant le plasma froid ou une combinaison de l'absorption sur charbon actif et de la photocatalyse, ou une combinaison du plasma froid et de la photocatalyse.

5. Système selon l'une quelconque des revendications précédentes, **caractérisé en ce que** les moyens de détection (30) incluent un capteur biologique mesurant la concentration (P) en virus, en champignons ou en bactéries et le dispositif d'épuration (20) inclut un système utilisant le plasma froid ou une combinaison de l'absorption sur charbon actif et de la photocatalyse, ou une combinaison du plasma froid et de la photocatalyse.

6. Méthode de pilotage d'un système de régulation de température et d'épuration de l'air ambiant dans un bâtiment selon l'une des revendications précédentes, **caractérisée en ce qu'**elle comprend des étapes dans lesquelles :
a) l'unité de pilotage (50) règle (2) l'ouverture de la vanne (60) et l'intensité des moyens de mise en mouvement (112) de l'air ambiant en fonction du résultat de la comparaison (1) entre la température ambiante (T) et une température de consigne (Tc),
b) l'unité de pilotage (50) commande (5) l'activation du module d'épuration du dispositif d'épuration (20) pour traiter les polluants particulaires chimiques et/ou biologiques en fonction du résultat de la comparaison (3) entre la concentration en polluant (P) dans l'air ambiant et une concentration limite (Pc).

7. Méthode selon la revendication 6, **caractérisée en ce que** les étapes a) et b) sont successives.

8. Méthode selon l'une des revendications 6 ou 7, **caractérisée en ce que** lorsque la concentration en polluant (P) dans l'air ambiant est supérieure à une concentration limite (Pc), l'unité de pilotage (50) active le dispositif d'épuration (20) pendant une durée prédéterminée (D1).

9. Méthode selon l'une des revendications 6 à 8, **caractérisée en ce que** l'unité de pilotage (50) est apte à régler l'intensité du groupe moto-ventilateur selon plusieurs vitesses (V0, V1, V2, V3) croissantes qui représentent un pourcentage paramétrable de la vitesse maximale de rotation des moyens de mise en mouvement (112) de l'air ambiant.

10. Méthode selon l'une des revendications 6 à 8, **caractérisée en ce que** l'unité de pilotage (50) est apte à moduler le taux d'ouverture (M) de la vanne (60) selon plusieurs taux (M0-M4) croissants de l'ouverture (M) de la vanne, qui représentent un pourcentage paramétrable de l'ouverture maximale de la vanne (60).

11. Méthode selon l'une quelconque des revendications 6 à 10, **caractérisée en ce que** l'étape b) comprend une sous-étape au cours de laquelle l'unité de pilotage compare la concentration (P) en particules fines avec la concentration limite (Pc).

12. Méthode selon l'une quelconque des revendications 6 à 11, **caractérisée en ce que** le système comprend un capteur chimique et, lors de l'étape b), l'unité de pilotage compare la concentration en composé chimique, notamment le formaldéhyde benzène ou un styrène, par rapport à la concentration limite (Pc).

13. Méthode selon l'une quelconque des revendications 6 à 12, **caractérisée en ce que** le système comprend un capteur biologique et, lors de l'étape b), l'unité de pilotage compare la concentration en un polluant microbiologique, notamment un virus, un champignon ou une bactérie, par rapport à la concentration limite (Pc).

## Patentansprüche

1. System zur Steuerung der Temperatur und Reinigung der Umgebungsluft in einem Gebäude (B), umfassend:
- mindestens einen Wärmestrahler (10), der ein Gebläsekonvektor oder ein Raumklimagerät ist und der/das eine Motor-Lüfter-Einheit umfasst, umfassend einen Motor (111) und einen Lüfter (112), die Einrichtungen zum Inbewegungversetzen (11) der Umgebungsluft bilden, der Wärmestrahler umfassend Wärmeaustauscheinrichtungen (12) zwischen der Umgebungsluft und einem Wärmeträgerfluid-Kreislauf (13), wobei die Einrichtungen zum Inbewegungversetzen angepasst sind, um die Umgebungsluft gegen die Wärmeaustauscheinrichtungen zu zirkulieren,
- ein Ventil (60) zum Einstellen des Durchflusses des Wärmeträgerfluids (13),
- Messeinrichtungen (40) der Temperatur (T) der Umgebungsluft, - Erfassungseinrichtungen (30) der Konzentration (P) mindestens eines Schadstoffs in der Umgebungsluft,
- eine Aufreinigungsvorrichtung (20) der Umgebungsluft, die mindestens ein Aufreinigungsmodul beinhaltet, das angepasst ist, um partikelförmige, chemische oder biologische Schadstoffe zu behandeln, die von den Erfassungseinrichtungen (30) der Konzentration (P) mindestens eines Schadstoffs in der Umgebungsluft erfasst werden, wobei die Intensität der Aufreinigungsvorrichtung (20) von der Intensität der Einrichtungen zum Inbewegungversetzen (112) der Umgebungsluft abhängig ist,
- eine Steuereinheit (50), die angepasst ist, um die Einrichtungen zum Inbewegungversetzen (11) der Umgebungsluft, des Ventils (60) und der Aufreinigungsvorrichtung (20) abhängig von der Temperatur (T) der Umgebungsluft und der Konzentration (P) von Schadstoff in der Umgebungsluft zu steuern.

2. System nach Anspruch 1, **dadurch gekennzeichnet, dass** die Aufreinigungsvorrichtung (20) einen Partikelfilter beinhaltet, der angepasst ist, um partikelförmige Schadstoffe zurückzuhalten.

3. System nach einem der vorherigen Ansprüche, **dadurch gekennzeichnet, dass** die Erfassungseinrichtungen (30) einen Partikelsensor beinhalten, der die Konzentration (P) von Feinpartikeln misst, und die Aufreinigungsvorrichtung (20) einen Feinpartikelfilter beinhaltet.

4. System nach einem der vorherigen Ansprüche, **dadurch gekennzeichnet, dass** die Erfassungseinrichtungen (30) einen chemischen Sensor beinhalten, der die Konzentration (P) von Formaldehyd, Benzol oder Styrol misst, und die Aufreinigungsvorrichtung (20) ein System beinhaltet, das kaltes Plasma oder eine Kombination von Absorption auf Aktivkohle und von Photokatalyse oder eine Kombination von kaltem Plasma und Photokatalyse verwendet.

5. System nach einem der vorherigen Ansprüche, **dadurch gekennzeichnet, dass** die Erfassungseinrichtungen (30) einen biologischen Sensor beinhalten, der die Konzentration (P) von Viren, Pilzen oder Bakterien misst, und die Aufreinigungsvorrichtung (20) ein System beinhaltet, das kaltes Plasma oder eine Kombination von Absorption auf Aktivkohle und Photokatalyse oder eine Kombination von kaltem Plasma und Photokatalyse verwendet.

6. Steuerungsverfahren eines Temperaturregelungs- und Umgebungsluft-Aufreinigungssystems in einem Gebäude nach einem der vorherigen Ansprüche, **dadurch gekennzeichnet, dass** es Schritte umfasst, bei denen:
a) die Steuereinheit (50) die Öffnung des Ventils (60) und die Intensität der Einrichtungen zum Inbewegungversetzen (112) der Umgebungsluft abhängig von dem Resultat des Vergleichs (1) zwischen der Umgebungstemperatur (T) und einer Vorgabetemperatur (Te) reguliert (2),
b) die Steuereinheit (50) die Aktivierung des Aufreinigungsmoduls der Aufreinigungsvorrichtung (20) zum Behandeln der chemischen und/oder biologischen partikelförmige Schadstoffe abhängig von dem Resultat des Vergleichs (3) zwischen der Schadstoffkonzentration (P) in der Umgebungsluft und einer Grenzkonzentration (Pc) steuert (5).

7. Verfahren nach Anspruch 6, **dadurch gekennzeichnet, dass** die Schritte a) und b) aufeinanderfolgend sind.

8. Verfahren nach einem der Ansprüche 6 oder 7, **dadurch gekennzeichnet, dass** die Steuereinheit (50), wenn die Schadstoffkonzentration (P) in der Umgebungsluft größer ist als eine Grenzkonzentration (Pc), die Aufreinigungsvorrichtung (20) für eine vorbestimmte Zeitdauer (D1) aktiviert.

9. Verfahren nach einem der Ansprüche 6 bis 8, **dadurch gekennzeichnet, dass** die Steuereinheit (50) angepasst ist, um die Intensität der Motor-Lüfter-Einheit gemäß mehreren ansteigenden Drehzahlen (V0, V1, V2, V3) zu regulieren, die einen parametrierbaren Prozentsatz der maximalen Drehgeschwindigkeit der Einrichtungen zum Inbewegungversetzen (112) der Umgebungsluft darstellen.

10. Verfahren nach einem der Ansprüche 6 bis 8, **dadurch gekennzeichnet, dass** die Steuereinheit (50) angepasst ist, um die Öffnungsrate (M) des Ventils (60) nach mehreren ansteigenden Raten (M0-M4) der Öffnung (M) des Ventils zu modulieren, die einen parametrierbaren Prozentsatz der maximalen Öffnung des Ventils (60) darstellen.

11. Verfahren nach einem der Ansprüche 6 bis 10, **dadurch gekennzeichnet, dass** Schritt b) einen Teilschritt umfasst, in deren Verlauf die Steuereinheit die Konzentration (P) von Feinpartikeln mit der Grenzkonzentration (Pc) vergleicht.

12. Verfahren nach einem der Ansprüche 6 bis 11, **dadurch gekennzeichnet, dass** das System einen chemischen Sensor umfasst und die Steuereinheit in Schritt b) die Konzentration der chemischen Verbindung, insbesondere Benzolformaldehyd oder ein Styrol, mit der Grenzkonzentration (Pc) vergleicht.

13. Verfahren nach einem der Ansprüche 6 bis 12, **dadurch gekennzeichnet, dass** das System einen biologischen Sensor umfasst und die Steuereinheit bei Schritt b) die Konzentration eines mikrobiologischen Schadstoffs, insbesondere eines Virus, Pilzes oder Bakteriums, mit der Grenzkonzentration (Pc) vergleicht.

## Claims

1. An ambient air temperature control and purification system in a building (B), comprising:
- at least one thermal emitter (10), which is a fan coil unit or an indoor air conditioning unit and which comprises a motor-fan unit comprising a motor (111) and a fan (112) forming means for moving (11) the ambient air, the thermal emitter comprising means for heat exchange (12) between the ambient air and a heat transfer fluid circuit (13), the means for moving being capable of circulating the ambient air against the means for heat exchange,
- a valve (60) for adjusting the flow of the heat transfer fluid (13),
- means (40) for measuring the temperature (T) of the ambient air, - means (30) for detecting the concentration (P) of at least one pollutant in the ambient air,
- a device (20) for purifying the ambient air including at least one purification module capable of treating particulate, chemical or biological pollutants detected by said means (30) for detecting the concentration (P) of at least one pollutant in the ambient air, the intensity of the purification device (20) being a function of the intensity of the means (112) for moving the ambient air,
- a control unit (50) capable of controlling the activation of the means (11) for moving the ambient air, the valve (60), and the purification device (20) as a function of the temperature (T) of the ambient air and of the concentration (P) of pollutant in the ambient air.

2. A system as claimed in claim 1, **characterised in that** the purification device (20) includes a particulate filter capable of retaining particulate pollutants.

3. A system according to any of the preceding claims, **characterised in that** the detection means (30) include a particle sensor measuring the concentration (P) of fine particles and the purification device (20) includes a fine particle filter.

4. A system according to any of the preceding claims, **characterised in that** the detection means (30) includes a chemical sensor measuring the concentration (P) of formaldehyde, benzene or styrene and the purification device (20) includes a system using cold plasma or a combination of absorption on activated carbon and photocatalysis, or a combination of cold plasma and photocatalysis.

5. A system according to any of the preceding claims, **characterised in that** the detection means (30) includes a biological sensor measuring the concentration (P) of viruses, fungi, or bacteria, and the purification device (20) includes a system using cold plasma or a combination of absorption on activated carbon and photocatalysis, or a combination of cold plasma and photocatalysis.

6. A method of controlling an ambient air temperature control and purification system in a building according to one of the preceding claims, **characterised in that** it comprises steps in which:
a) the control unit (50) adjusts (2) the opening of the valve (60) and the intensity of the means (112) for moving the ambient air as a function of the result of the comparison (1) between the room temperature (T) and a setpoint temperature (Te),
b) the control unit (50) controls (5) the activation of the purification module of the purification device (20) for treating the chemical and/or biological particulate pollutants as a function of the result of the comparison (3) between the pollutant concentration (P) in the ambient air and a limit concentration (Pc).

7. A method according to claim 6, **characterised in that** steps a) and b) are successive.

8. A method according to one of claims 6 or 7, **characterised in that** when the concentration of pollutants (P) in the ambient air is greater than a limit concentration (Pc), the control unit (50) activates the purification device (20) for a predetermined period of time (D1).

9. A method according to one of claims 6 to 8, **characterised in that** the control unit (50) is able to regulate the intensity of the motor-fan unit according to a plurality of increasing speeds (V0, V1, V2, V3) which represent a configurable percentage of the maximum speed of rotation of the means (112) for moving the ambient air.

10. A method according to one of claims 6 to 8, **characterised in that** the control unit (50) is able to modulate the opening rate (M) of the valve (60) according to a plurality of increasing rates (M0-M4) of the valve opening (M), which represent a configurable percentage of the maximum opening of the valve (60).

11. A method according to any one of claims 6 to 10, **characterised in that** step b) comprises a sub-step in which the control unit compares the concentration (P) of fine particles with the limit concentration (Pc).

12. A method according to any one of claims 6 to 11, **characterised in that** the system comprises a chemical sensor and, in step b), the control unit compares the concentration of the chemical compound, in particular formaldehyde benzene or a styrene, with the limit concentration (Pc).

13. A method according to any one of claims 6 to 12, **characterised in that** the system comprises a biological sensor and, in step b), the control unit compares the concentration of a microbiological pollutant, in particular a virus, fungus or bacteria, with the limit concentration (Pc).
